(19) Europäisches Patentamt
European Patent Office
Office européen des brevets

(11) **EP 2 624 933 B1**

(12) **EUROPEAN PATENT SPECIFICATION**

(45) Date of publication and mention
of the grant of the patent:
**03.09.2014 Bulletin 2014/36**

(21) Application number: **11781623.1**

(22) Date of filing: **05.10.2011**

(51) Int Cl.:
***B01D 35/02*** (2006.01)

(86) International application number:
**PCT/IB2011/054387**

(87) International publication number:
**WO 2012/046197 (12.04.2012 Gazette 2012/15)**

(54) **A FILTER FOR LIQUIDS, IN PARTICULAR FOR ELECTRIC VALVES OF HOUSEHOLD APPLIANCES AND THE LIKE**

FLÜSSIGKEITSFILTER, INSBESONDERE FÜR EIN ELEKTRISCHES VENTIL IN HAUSHALTSGERÄTEN UND DERGLEICHEN

FILTRE POUR LIQUIDES, NOTAMMENT POUR VALVES ÉLECTRIQUES D'APPAREILS MÉNAGERS ET ANALOGUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2010 IT TO20100808**

(43) Date of publication of application:
**14.08.2013 Bulletin 2013/33**

(73) Proprietor: **ELBI International S.p.A.
10129 Torino (IT)**

(72) Inventors:
• **RAVEDATI, Paolo
I-10024 MONCALIERI (Torino) (IT)**
• **GONELLA, Fabrizio
I-10020 CAMBIANO (Torino) (IT)**
• **DI BENEDETTO, Francesco
I-10095 GRUGLIASCO (Torino) (IT)**
• **RENDESI, Maurizio
I-10090 VILLARBASSE (Torino) (IT)**

(74) Representative: **Quinterno, Giuseppe et al
Jacobacci & Partners S.p.A.
Corso Emilia 8
10152 Torino (IT)**

(56) References cited:
**US-A- 4 882 055     US-A1- 2010 155 345**

EP 2 624 933 B1

## Description

The present invention relates to a filter for liquids, and in particular an inlet filter for a hydraulic electric valve for household appliances and the like.

More specifically, the invention relates to a filter for liquids of the kind including a body of moulded plastic material having at least a central cup-like hollow portion, having an axis and provided with a wall which has a plurality of holes designed for the passage ofaflow of liquid, said holes being essentially transverse with reject to said axis.

A filter of this kind is disclosed in US 4 882 055 A.

One object of the present invention is to provide an improved filler for liquids of the type defined above.

This and other objects are achieved according to the invention with a filter for liquids of the type defined above, comprising:

a central hollow portion shaped like a cup, having an axis, and
a peripheral plate-like portion, shaped as a flange, extending radially towards the outside around the open end of the central cup-shaped portion, and wherein
in the lateral wall of the central portion there is provided a plurality of through holes, essentially transverse with respect to said axis, and in the peripheral portion there is provided a plurality of through holes essentially parallel to said axis.

Conveniently, for use in a conduit having a predetermined average transverse radial dimension, the central portion of the filter has an average transverse radial dimension comprised between about 0.45 and about 0.8 times the average transverse radial dimension of the conduit.

Additionally, the axial length of the central portion of the filter is conveniently greater than or equal to about 0.7 times the average radial dimension of the conduit.

These ranges of values enable the behaviour of the filter to be optimized, as will be explained more fully below.

According to a further advantageous characteristic, the holes provided in the lateral wall of the central portion of the filter are all parallel to each other.

Because of this characteristic, only two moving carriages are required for moulding the lateral wall of the central cup-shaped portion. The moulding equipment is therefore considerably simplified.

Other characteristics and advantages of the invention will become clear from the following detailed description which is given purely by way of non-limiting example with reference to the attached drawings, in which:

Figure 1 is a perspective view showing a filter for liquids according to the present invention and two movable carriages of the moulding equipment for forming the lateral wall of the central cup-shaped portion of the filter;

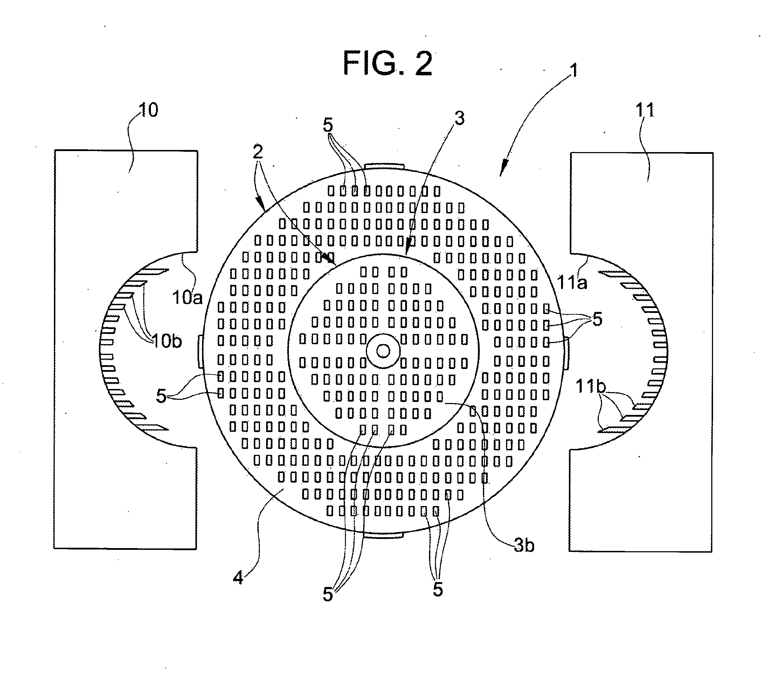

Figure 2 is a front view of the filter and of the moulding devices shown in Figure 1;
Figure 3 is a partial perspective view showing part of the filter according to the preceding drawings and an associated moulding device;
Figure 4 is a schematic representation in axial section of a conduit provided with a filter according to the invention, and
Figure 5 is a diagram illustrating characteristics of a filter of this kind.

In the drawings, the number 1 indicates the whole of a filter for liquids according to the present invention.

The filter 1 is, for example, an inlet filter for a hydraulic electric valve for use in a household appliance or the like.

In the embodiment shown by way of example, the filter 1 comprises a body 2 of moulded plastic material.

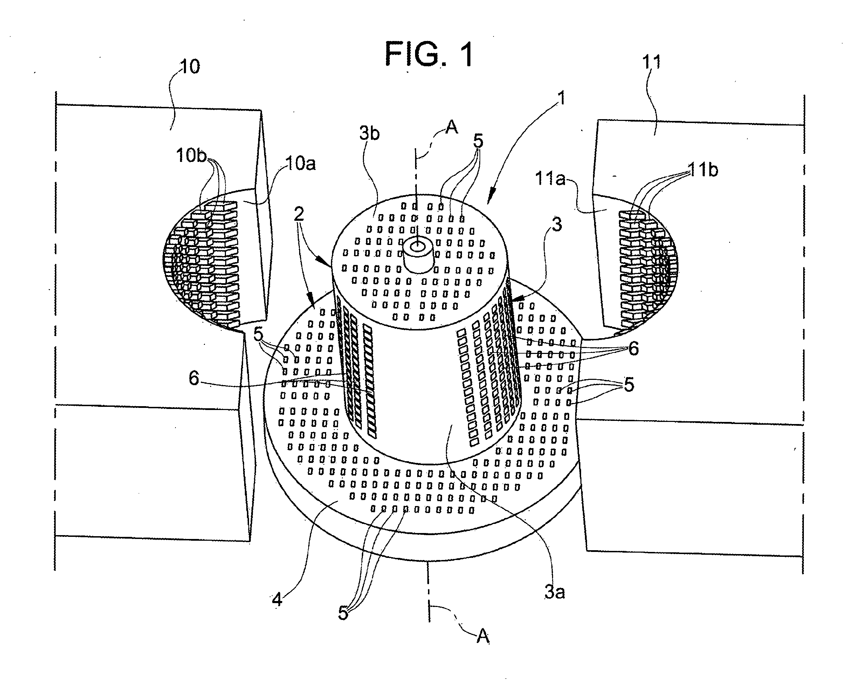

The body 2 has a hollow central portion 3, in the shape of a cup, the axis of which is indicated by A-A in Figure 1.

The body 2 of the filter also has an annular plate-like peripheral portion 4, essentially shaped as a flange, extending radially towards the outside around the open end of the central cup-shaped portion 3.

In the embodiment illustrated in the drawings, the central cup-shaped part 3 of the filter has an essentially frusto-conical lateral wall 3a.

On the side opposite to the peripheral flange-like portion 4, the frusto-conical lateral wall 3a is closed by a planar end wall 3b parallel to the peripheral portion 4.

The peripheral flange-like portion 4 and the planar end wall 3b of the filter have respective pluralities of through holes 5, essentially parallel to the axis A-A of the filter.

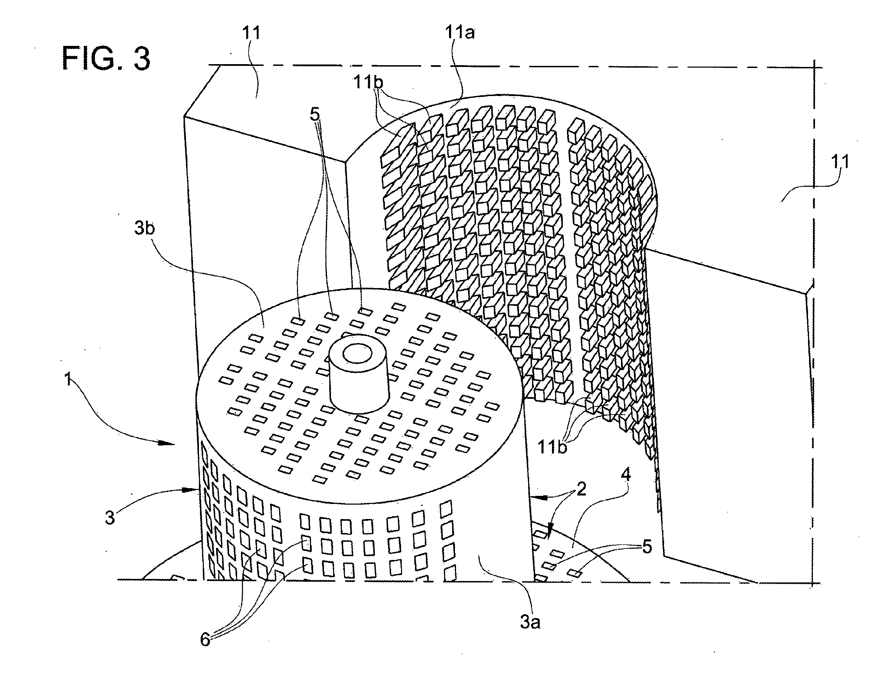

In the lateral wall 3a of the central portion there is provided a plurality of through holes 6, the axes of which lie in planes which are essentially transverse with respect to the axis A-A of the filter (see, in particular, Figures 1 and 3).

Said through holes 6 are conveniently all parallel to each other and to a diameter of the lateral wall 3a.

This characteristic greatly simplifies the devices required for the injection moulding of the filter 1, and in particular for the forming of its central portion 3 and of the lateral wall 3a thereof.

This is because, as shown in the drawings, only two moving carriages, such as those indicated by 10 and 11 in the drawings, are required for forming the lateral wall 3a, together with an essentially frusto-conical inner core (not shown).

The two carriages 10 and 11 have respective cavities 10a and 11 a, which face each other when in use. In these cavities there extend respective arrays of protuberances 10b and 11b which are parallel to each other, and which are designed to form the through holes 6 in the lateral wall 3a of the central portion 3 of the filter. As a general rule, the protuberances 10b and 11b differ in their longitudinal extension, according to their angular positions, and have curved end surfaces which are complementary to a corresponding ring on the outer surface of the core designed to form the inner cavity of the central cup-shaped portion 3 of the filter.

The carriages 10 and 11 are positioned opposite each other and can be moved towards and away from each other along a single path.

Conveniently, both the through holes 5 and the through holes 6 of the filter 1 have a cross section which is essentially quadrangular, and preferably rectangular.

Although the central cup-shaped portion 3 of the filter 1 shown in the drawings is essentially frusto-conical, in other possible embodiments (not shown) this central portion of the filter could be frusto-pyramidal, cylindrical, or prismatic in shape.

In other possible embodiments which are not shown, the central cup-shaped part 3 of the filter can be essentially conical or pyramidal in shape.

Experiments have shown that, for optimal operation of a filter of the type described above, the average diameter of the central cup-shaped portion 3 should be comprised between about 0.4 and about 0.8 times the diameter of the peripheral flange-like portion 4, that is to say the diameter of the conduit in which the filter is positioned when in use, and this holds true for practically any axial extension of the central portion 3.

On the basis of these results it is possible to give a "theoretical" proof, as described below.

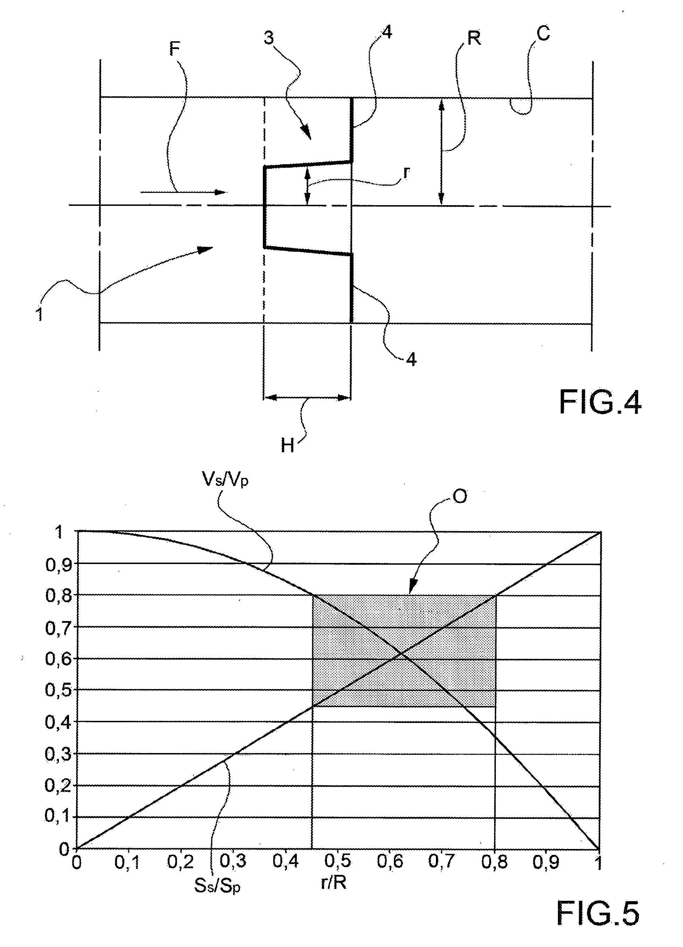

A mathematical description providing a first approximation of a filter 1 according to the invention will now be given with reference to Figure 4.

Figure 4 is a schematic illustration of a circular cylindrical conduit C having a radius R, in which is placed a filter 1 as described above, the central cup-shaped portion 3 of the filter having an axial length H and an average radius r<R.

The direction of the flow of liquid to be filtered during operation is indicated by the arrow F.

If $V_p$ denotes the maximum volume that the central part 3 of the filter can occupy when r and H vary, we find that:

$$V_p = \pi H R^2 \qquad (1).$$

Also, if $V_f$ denotes the volume occupied by the central portion 3 (assumed to have a circular cylindrical shape), we find that:

$$V_f = \pi H r^2 \qquad (2).$$

Then, if Sp denotes the maximum surface area of the central portion 3 (assumed to have a circular cylindrical shape), we find that:

$$S_p = 2\pi H R \qquad (3).$$

Finally, if $S_f$ denotes the surface area of the central part 3 (assumed to have a circular cylindrical shape), then we also find that:

$$S_f = 2\pi H r \qquad (4).$$

In the filter 1, the volume $V_s$ available for the sedimentation of the retained particulate matter is:

$$V_s = V_p - V_f = \pi R(R^2 - r^2) \qquad (5).$$

From equations (5) and (1) above it follows that:

$$V_s / V_p = 1 - \frac{r^2}{R^2} \qquad (6).$$

Also, from equations (4) and (3) it follows that:

$$S_f / S_p = \frac{r}{P} \qquad 7).$$

Figure 5 shows the variations of the ratios $V_s/V_p$ and $S_f/S_p$ as functions of the ratio r/R shown on the horizontal axis.

Clearly, these ratios vary in opposite directions. It is also possible to identify an area, such as that indicated by 0, in which the aforesaid ratios (or coefficients of volume and surface area respectively) are optimal.

This area corresponds to an optimal range of values of the ratio r/R comprised between about 0.45 and 0.80.

This result is substantially in agreement with the experimental findings described above.

In the case of non-circular transverse geometries, the above findings remain valid in relation to the average transverse dimensions of the conduit and of the central part of the filter.

It has also been found that, if the axial length H of the central portion 3 of the filter 1 is substantially equal to or greater than 0.7 times the average radial dimension R of the conduit C, there is an optimal distribution of the particulate matter retained downstream of the filter 1, which is distributed with a "slope" related to the angle of friction of this particulate matter, leaving a considerable surface area free in the upper peripheral area of the filter.

## Claims

1. Filter (1) for liquids, in particular an inlet filter (1) for hydraulic electric valves for use in household appliances and the like, comprising a body of moulded plastic material including
   a central hollow portion (3) shaped like a cup, having an axis (A-A), and
   a peripheral plate-like portion (4), shaped as an annular flange, extending radially towards the outside around the open end of the central cup-shaped portion (3), and wherein
   in the lateral wall (3a) of the central cup-shaped portion (3) there is provided a plurality of through holes (6), essentially transverse with respect to said axis (A-A), and
   in the peripheral flange-like portion (4) there is provided a plurality of through holes (5) essentially parallel to the axis (A-A).

2. Filter for liquids according to Claim 1, for use in a conduit (C) having a predetermined average transverse radial dimension (R), the central portion (3) of the filter (1) having an average transverse radial dimension (r) comprised between about 0.4 and about 0.8 times the average transverse dimension (R) of the conduit (C).

3. Filter for liquids according to Claim 2, wherein the axial length (H) of the central portion (3) is greater than or equal to about 0.7 times the average radial dimension (R) of the conduit (C).

4. Filter for liquids according to one of the preceding claims, wherein the through holes (6) provided in the lateral wall (3a) of the central cup-shaped portion (3) are all parallel to each other.

5. Filter for liquids according Claim 4, wherein the through holes (6) provided in the lateral wall (3a) of the cup-shaped portion (3) are parallel to a diameter of the wall (3a).

6. Filter for liquids according to Claim 4 or 5, wherein the central cup-shaped portion (3) has a lateral wall (3a) which is essentially frusto-conical or frusto-pyramidal or cylindrical or prismatic, and on the side opposite to the peripheral flange-like portion (4) is closed by a planar end wall (3b) parallel to the peripheral flange-like portion (4); the end wall (3b) being provided with a plurality of through holes (5) essentially parallel to said axis (A-A).

**7.** Filter for liquids according to Claim 4 or 5, wherein the central cup-shaped portion (3) has an essentially conical or pyramidal shape.

**8.** Filter for liquids according to any of the preceding claims, wherein the aforesaid through holes (5, 6) have an essentially quadrangular cross section, preferably an essentially rectangular cross section.


**Patentansprüche**

**1.** Filter (1) für Flüssigkeiten, insbesondere Einlassfilter (1) für hydraulische elektrische Ventile zur Verwendung in Haushaltsgeräten und ähnlichem, umfassend einen Körper aus geformtem Kunststoffmaterial, umfassend:

einen zentralen Hohlabschnitt (3), welcher wie eine Tasse geformt ist, welcher eine Achse (A-A) aufweist, und einen peripheren Teller-artigen Abschnitt (4), welcher als ein ringförmiger Flansch geformt ist, welcher sich radial in Richtung der Außenseite um das offene Ende des zentralen tassenförmigen Abschnitts (3) herum erstreckt, und wobei
in der lateralen Wand (3a) des zentralen tassenförmigen Abschnitts (3) eine Mehrzahl von Durchgangslöchern (6) bereitgestellt ist, welche im Wesentlichen transversal bezüglich der Achse (A-A) sind, und
in dem peripheren Flansch-artigen Abschnitt (4) eine Mehrzahl von Durchgangslöchern (5) bereitgestellt ist, welche im Wesentlichen parallel zu der Achse (A-A) sind.

**2.** Filter für Flüssigkeiten nach Anspruch 1, zur Verwendung in einer Leitung (C) mit einer vorbestimmten durchschnittlichen transversalen radialen Abmessung (R), wobei der zentrale Abschnitt (3) des Filters (1) eine durchschnittliche transversale radiale Abmessung (r) aufweist, welche zwischen etwa 0,4 und etwa 0,8 mal der durchschnittlichen transversalen Abmessung (R) der Leitung (C) liegt.

**3.** Filter für Flüssigkeiten nach Anspruch 2, wobei die axiale Länge (H) des zentralen Abschnitts (3) größer oder gleich etwa 0,7 mal der durchschnittlichen radialen Abmessung (R) der Leitung (C) ist.

**4.** Filter für Flüssigkeiten nach einem der vorhergehenden Ansprüche, wobei die Durchgangslöcher (6), welche in der lateralen Wand (3a) des zentralen tassenförmigen Abschnitts (3) bereitgestellt sind, alle parallel zueinander sind.

**5.** Filter für Flüssigkeiten nach Anspruch 4, wobei die Durchgangslöcher (6) in der lateralen Wand (3a) des tassenförmigen Abschnitts (3) parallel zu einem Durchmesser der Wand (3a) sind.

**6.** Filter für Flüssigkeiten nach Anspruch 4 oder 5, wobei der zentrale tassenförmige Abschnitt (3) eine laterale Wand (3a) aufweist, welche im Wesentlichen kegelstumpfförmig oder pyramidenstumpfförmig oder zylindrisch oder prismatisch ist, und an einer Seite gegenüber dem peripheren Flansch-artigen Abschnitt (4) von einer planaren Endwand (3b) geschlossen ist, welche parallel zu dem peripheren Flansch-artigen Abschnitt (4) ist; wobei die Endwand (3b) mit einer Mehrzahl von Durchgangslöchern (5) bereitgestellt ist, welche im Wesentlichen parallel zu der Achse (A-A) sind.

**7.** Filter für Flüssigkeiten nach Anspruch 4 oder 5, wobei der zentrale tassenförmige Abschnitt (3) eine im Wesentlichen konische oder pyramidenförmige Form aufweist.

**8.** Filter für Flüssigkeiten nach einem der vorhergehenden Ansprüche, wobei die Durchgangslöcher (5, 6) einen im Wesentlichen viereckigen Querschnitt aufweisen, vorzugsweise einen im Wesentlichen rechteckigen Querschnitt.


**Revendications**

**1.** Filtre (1) pour liquides, en particulier filtre d'entrée (1) pour vannes électro-hydrauliques destinées à être utilisées dans des appareils ménagers et similaires, comprenant un corps en matière plastique moulée comportant :

une partie centrale creuse (3) en forme de tasse, ayant un axe (A-A), et

une partie périphérique plate (4), en forme de bride annulaire, s'étendant radialement vers l'extérieur autour de l'extrémité ouverte de la partie centrale en forme de tasse (3), et dans lequel

dans la paroi latérale (3a) de la partie centrale en forme de tasse (3) est prévue une pluralité de trous traversants (6), essentiellement transversaux par rapport audit axe (A-A), et

dans la partie périphérique en forme de bride (4) est prévue une pluralité de trous traversants (5) essentiellement parallèles à l'axe (A-A).

**2.** Filtre pour liquides selon la revendication 1, destiné à être utilisé dans une conduite (C) ayant une dimension transversale radiale moyenne prédéterminée (R), la partie centrale (3) du filtre (1) ayant une dimension transversale radiale moyenne (r) comprise entre environ 0,4 et environ 0,8 fois la dimension transversale moyenne (R) de la conduite (C).

**3.** Filtre pour liquides selon la revendication 2, dans lequel la longueur axiale (H) de la partie centrale (3) est supérieure ou égale à environ 0,7 fois la dimension radiale moyenne (R) de la conduite (C).

**4.** Filtre pour liquides selon l'une des revendications précédentes, dans lequel les trous traversants (6) prévus dans la paroi latérale (3a) de la partie centrale en forme de tasse (3) sont tous parallèles entre eux.

**5.** Filtre pour liquides selon la revendication 4, dans lequel les trous traversants (6) prévus dans la paroi latérale (3a) de la partie centrale en forme de tasse (3) sont parallèles à un diamètre de la paroi (3a).

**6.** Filtre pour liquides selon la revendication 4 ou 5, dans lequel la partie centrale en forme de tasse (3) a une paroi latérale (3a) qui est essentiellement tronconique ou en tronc de pyramide ou cylindrique ou prismatique, et du côté opposé à la partie périphérique en forme de bride (4), est fermée par une paroi d'extrémité plane (3b) parallèle à la partie périphérique en forme de bride (4) ; la paroi d'extrémité (3b) étant pourvue d'une pluralité de trous traversants (5) essentiellement parallèles audit axe (A-A).

**7.** Filtre pour liquides selon la revendication 4 ou 5, dans lequel la partie centrale en forme de tasse (3) est de forme essentiellement conique ou pyramidale.

**8.** Filtre pour liquides selon l'une quelconque des revendications précédentes, dans lequel lesdits trous traversants (5, 6) sont de section essentiellement quadrangulaire, de préférence de section essentiellement rectangulaire.

# FIG. 1

# FIG. 2

FIG. 3

EP 2 624 933 B1

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4882055 A